# EUROPEAN PATENT APPLICATION

(11) **EP 4 810 775 A1**
(43) Date of publication of application: **23.09.2026**
(21) Application number: 26166860.2
(22) Date of filing: 23.03.2026
(51) Int. Cl.: F02C 3/113, F02C 7/36, F16H 47/04, F16H 37/08

(54) **TWO-SPEED EPICYCLIC GEARBOX WITH CLUTCH FOR AIRCRAFT PROPULSION SYSTEM**

(30) Priority: 21.03.2025 US 202519086770
(71) Applicant: Pratt & Whitney Canada Corp., Longueuil, Québec J4G 1A1 (CA)
(72) Inventor: MENHEERE, Dave, (01BE5) Longueuil, J4G 1A1 (CA); STRATTON, Russell, (01BE5) Longueuil, J4G 1A1 (CA)
(74) Representative: Dehns

(57) **Abstract**

An aircraft propulsion system is provided that includes a thermal engine, a gearbox (36), and a hydraulically actuated clutch system. The gearbox (36) includes an input shaft (46), an output shaft (48), an epicyclic gear arrangement (42), a drive gear (44), and a first layshaft assembly (50). The clutch system includes a hydraulic coupling device engaged with the first layshaft assembly (50). The epicyclic gear arrangement (42) includes a sun gear (54), planet gears (56), and a ring gear (60). The first layshaft assembly (50) includes a first layshaft, a first layshaft input gear (70), and a first layshaft ring engagement gear (72). The first layshaft ring engagement gear (72) is engaged with the ring gear (60), and the first layshaft input gear (70) is engaged with the drive gear (44) and the input shaft (46). The clutch system is disposable in an disengaged configuration and in an engaged configuration.

## Description

### BACKGROUND OF THE INVENTION

### 1. Technical Field

The present invention relates to aircraft propulsion systems in general, and to aircraft propulsion system gearboxes in particular.

### 2. Background Information

Turboprop engines typically employ variable pitch propellers that permit the propeller pitch to be adjusted during phases of an aircraft mission. Typically, a high propeller speed is used in takeoff while a reduced propeller speed is used in a climb setting and a cruise setting to reduce cabin noise. A further reduced propeller speed may also be used at engine idle.

The power turbine of the turboprop engine is connected to the propeller and the speed of the power turbine may be dictated by the propeller. The efficiency of a power turbine is typically greatest at the maximum speed used in takeoff. Consequently, there may be an efficiency penalty associated with operating the power turbine at a lower than maximum speed; e.g., a reduced speed during a climb setting or a cruise setting.

What is needed is a system and method for a propeller driven aircraft that can provide an improved means of controlling propeller speed and power turbine speed.

### SUMMARY

According to an aspect of the present invention, an aircraft propulsion system is provided that includes a thermal engine, a gearbox, and a hydraulically actuated clutch system. The gearbox includes an input shaft, an output shaft, an epicyclic gear arrangement, a drive gear, and a first layshaft assembly. The input shaft is driven by the thermal engine. The hydraulically actuated clutch system includes a hydraulic coupling device engaged with the first layshaft assembly. The epicyclic gear arrangement includes a sun gear, a plurality of planet gears, and a ring gear. The sun gear is connected with the drive gear. The first layshaft assembly extends along a first layshaft rotational axis and includes a first layshaft, a first layshaft input gear, and a first layshaft ring engagement gear. The first layshaft ring engagement gear is engaged with the ring gear, and the first layshaft input gear is engaged with the drive gear and the input shaft. The hydraulically actuated clutch system is disposable in an disengaged configuration wherein the first layshaft ring engagement gear is uncoupled with the first layshaft input gear, and in an engaged configuration wherein the first layshaft ring engagement gear is coupled with the first layshaft input gear.

In any of the aspects or embodiments described above and herein, the hydraulic coupling device may include a pump impeller and a turbine wheel disposed in a working chamber, a fluid inlet port, and a fluid outlet port. The pump impeller may be engaged to be driven with the first layshaft input gear, and the turbine wheel is engaged with the first layshaft ring engagement gear. The pump impeller may be configured to utilize a fluid disposed within the working chamber to drive the turbine wheel.

In any of the aspects or embodiments described above and herein, the turbine wheel may include a central bore for receiving the first layshaft and may include an axially extending flange having an engagement face disposed at a distal axial end of the flange.

In any of the aspects or embodiments described above and herein, the hydraulically actuated clutch system may include a dog clutch (DC) that is configured to be disposed in a DC engaged configuration or in a DC disengaged configuration. In the DC engaged configuration, the turbine wheel and a hub of the dog clutch may be mechanically engaged with one another and rotate as a couple, and in the DC disengaged configuration, the turbine wheel and the hub may not be mechanically engaged with one another.

In any of the aspects or embodiments described above and herein, the dog clutch may include a linear actuator having a piston that is axially translatable between a deployed state and a non-deployed state. The linear actuator may be configured to be in the non-deployed state when the linear actuator is subjected to the fluid at a pressure below a predetermined threshold pressure value, and may be configured to be in the deployed state when the linear actuator is subjected to the fluid at a pressure at or above the predetermined threshold pressure value.

In any of the aspects or embodiments described above and herein, the linear actuator may be in the deployed state and the dog clutch may be in the DC engaged configuration. When the linear actuator is in the non-deployed state, the dog clutch may be in the DC disengaged configuration.

In any of the aspects or embodiments described above and herein, the dog clutch may further include a return spring configured to normally bias the piston in the non-deployed state.

In any of the aspects or embodiments described above and herein, the hydraulically actuated clutch system may include a dog clutch valve (DCV) that is controllable to be in a DCV open state or in a DCV closed state. In the DCV closed state, the dog clutch valve may be configured to prevent the fluid to flow from the hydraulic coupling device to the dog clutch. In the DCV open state, the dog clutch valve may be configured to allow the fluid to flow from the hydraulic coupling device to the dog clutch.

In any of the aspects or embodiments described above and herein, the hydraulically actuated clutch system may include a controller in communication with the dog clutch valve and a non-transitory memory storing instructions. The instructions when executed may cause the controller to control the dog clutch valve to change from the DCV closed state to the DCV open state.

In any of the aspects or embodiments described above and herein, the hydraulically actuated clutch system may include a gearbox input rotational speed sensor and a gearbox output rotational speed sensor. The gearbox input rotational speed sensor may be configured to sense a rotational speed of the input shaft and produce an input speed value representative of the rotational speed of the input shaft. The gearbox output rotational speed sensor may be configured to sense a rotational speed of the output shaft and produce an output speed value representative of the rotational speed of the output shaft. The instructions that when executed cause the controller to control the dog clutch valve to change from the DCV closed state to the DCV open state may be based at least in part on the input speed value and the output speed value.

In any of the aspects or embodiments described above and herein, the hydraulically actuated clutch system may include a supply valve (SV) that is controllable to be in a SV open state or in a SV closed state. In the SV open state, the supply valve may be configured to allow a flow of the fluid from a fluid supply into the hydraulic coupling device, and in the SV closed state the supply valve may allow a flow of the fluid from the hydraulic coupling device back to the fluid supply.

In any of the aspects or embodiments described above and herein, the hydraulically actuated clutch system may include a dump valve (DV) that is controllable to be in a DV open state or in a DV closed state. In the DV closed state, the dump valve may be configured to prevent the flow of the fluid from the hydraulic coupling device to the fluid supply, and in the DV open state the dump valve may be configured to allow the flow of the fluid from the hydraulic coupling device to the fluid supply.

In any of the aspects or embodiments described above and herein, when the dog clutch is disposed in the DC engaged configuration, the instructions when executed may cause the controller to control the dog clutch valve to be in the DCV open state, control the supply valve to be in the SV open state, and control the dump valve to be in the DV closed state.

In any of the aspects or embodiments described above and herein, when the dog clutch is disposed in the DC disengaged configuration, the instructions when executed may cause the controller to control the dog clutch valve to be in the DCV closed state, control the supply valve to be in the SV closed state, and control the dump valve to be in the DV open state.

According to another aspect of the present invention, a method of operating an aircraft propulsion system that includes a thermal engine is provided. The method includes: providing a gearbox that includes an input shaft, an output shaft, an epicyclic gear arrangement, a drive gear, and a first layshaft assembly, wherein the input shaft is driven by the thermal engine, wherein the epicyclic gear arrangement includes a sun gear, a plurality of planet gears, and a ring gear, wherein the sun gear is connected with the drive gear; operating a hydraulically actuated clutch system in a first mode or a second mode, wherein the hydraulically actuated clutch system includes a hydraulic coupling device engaged with the first layshaft assembly; wherein the first layshaft assembly extends along a first layshaft rotational axis and includes a first layshaft, a first layshaft input gear, and a first layshaft ring engagement gear, wherein the first layshaft ring engagement gear is engaged with the ring gear, and the first layshaft input gear is engaged with the drive gear and the input shaft; operating the hydraulically actuated clutch system in a first mode during a first flight segment by disposing the hydraulically actuated clutch system in an disengaged configuration wherein the first layshaft ring engagement gear is uncoupled with the first layshaft input gear; and operating the hydraulically actuated clutch system in a second mode during a second flight segment by disposing the hydraulically actuated clutch system in an engaged configuration wherein the first layshaft ring engagement gear is coupled with the first layshaft input gear.

In any of the aspects or embodiments described above and herein, the step of disposing the hydraulically actuated clutch system in an engaged configuration may include disposing a dog clutch (DC) in a DC engaged configuration. The dog clutch may include a hub, a linear actuator, and a fluid port. In the DC engaged configuration, the hub may be mechanically engaged with the turbine wheel.

In any of the aspects or embodiments described above and herein, the step of disposing the hydraulically actuated clutch system in an engaged configuration may include: using a gearbox input rotational speed sensor to sense a rotational speed of the input shaft and produce an input speed value representative of the rotational speed of the input shaft; using a gearbox output rotational speed sensor to sense a rotational speed of the output shaft and produce an output speed value representative of the rotational speed of the output shaft; and controlling a dog clutch valve (DCV) to be in a DCV open state, wherein in the DCV open state the dog clutch valve is configured to allow the fluid to flow from the hydraulic coupling device to the dog clutch.

In any of the aspects or embodiments described above and herein, the step of disposing the hydraulically actuated clutch system in an engaged configuration may include: controlling a supply valve (SV) to be in a SV open state that allows the fluid to flow from a fluid supply into the hydraulic coupling device; and controlling a dump valve (DV) to be in a DV open state wherein the dump valve prevents flow of the fluid from the hydraulic coupling device to the fluid supply.

In any of the aspects or embodiments described above and herein, the step of disposing the hydraulically actuated clutch system in a disengaged configuration may include disposing the dog clutch in a DC disengaged configuration. In the DC disengaged configuration, the hub may be mechanically disengaged with the turbine wheel.

The foregoing features and elements may be combined in various combinations without exclusivity, unless expressly indicated otherwise. For example, aspects and/or embodiments of the present invention may include any one or more of the individual features or elements disclosed above and/or below alone or in any combination thereof. These features and elements as well as the operation thereof will become more apparent in light of the following description and the accompanying drawings. The following description and drawings are intended to be exemplary in nature and non-limiting.

### BRIEF DESCRIPTION OF THE DRAWINGS

FIG. 1 is a diagrammatic sectional view of an exemplary gas turbine engine with a gearbox and a propulsion unit.
FIG. 2 is a diagrammatic perspective view of a present invention reduction gearbox embodiment.
FIG. 3 is a diagrammatic view of a present invention reduction gearbox embodiment.
FIG. 4 is a diagrammatic representation of a present invention epicyclic gear arrangement with the ring gear in a non-rotational mode.
FIG. 4A is a diagrammatic representation of a present invention epicyclic gear arrangement with the ring gear in a rotational mode.
FIG. 5 is a table illustrating an example of present invention two-speed gearbox operation.
FIG. 6 is a diagrammatic view of a present invention reduction gearbox embodiment.
FIG. 6A is a diagrammatic enlargement of the portion of the reduction gearbox embodiment shown in FIG. 6.
FIG. 7 is a diagrammatic perspective view of a present invention reduction gearbox embodiment.
FIG. 8 is an enlarged and sectioned portion of the reduction gearbox embodiment shown in FIG. 7.
FIG. 9 is a diagrammatic view of a portion of the reduction gearbox embodiment shown in FIG. 7.
FIG. 10 is an enlarged and sectioned portion of the reduction gearbox embodiment shown in FIGS. 7 and 8.
FIG. 11 is a schematic diagram of an aspect of the present invention.

### DETAILED DESCRIPTION

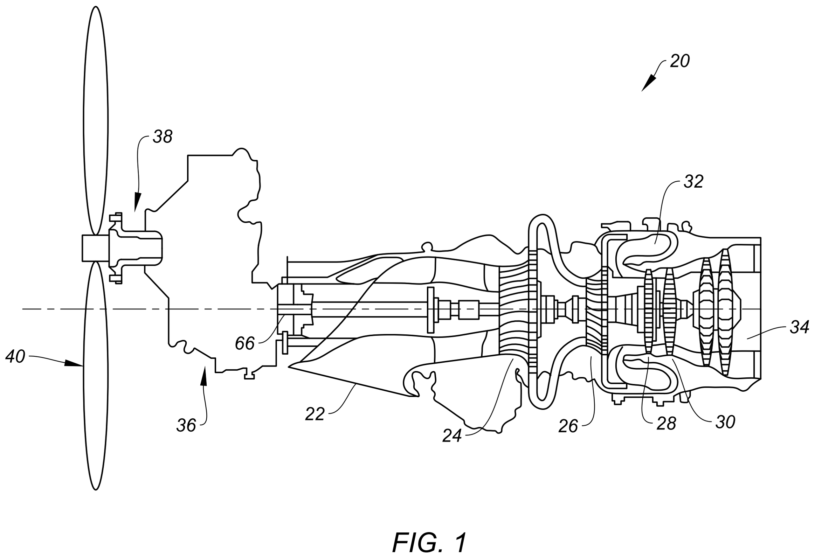

FIG. 1 is a diagrammatic cross-sectional view of gas turbine engine 20 that includes an inlet duct 22, a low pressure compressor 24, a high pressure compressor 26, a high pressure turbine 28, a low pressure turbine 30, and a combustor 32. The gas turbine engine 20 also includes a power turbine 34. The present invention is not limited to the gas turbine engine 20 shown in FIG. 1 and may be used with other gas turbine engine 20 configurations or other thermal engine configurations. The gas turbine engine 20 is in communication with a gearbox 36. The gearbox 36 is in communication with a propulsion unit 38 that includes a propeller 40. The present invention is not limited to use with propulsion units 38 that include propellers 40.

The gearbox 36 may assume different configurations. The term "gearbox" as used herein may refer to a reduction gearbox that is configured to accept an input rotational drive at a first rotational speed (S1) and at a first torque (T1) and produce an output rotational drive at a second rotational speed (S2) and at a second torque (T2), wherein the first rotational speed is greater than the second rotational speed (S1 > S2) and the second torque is greater than the first torque (T2 > T1).

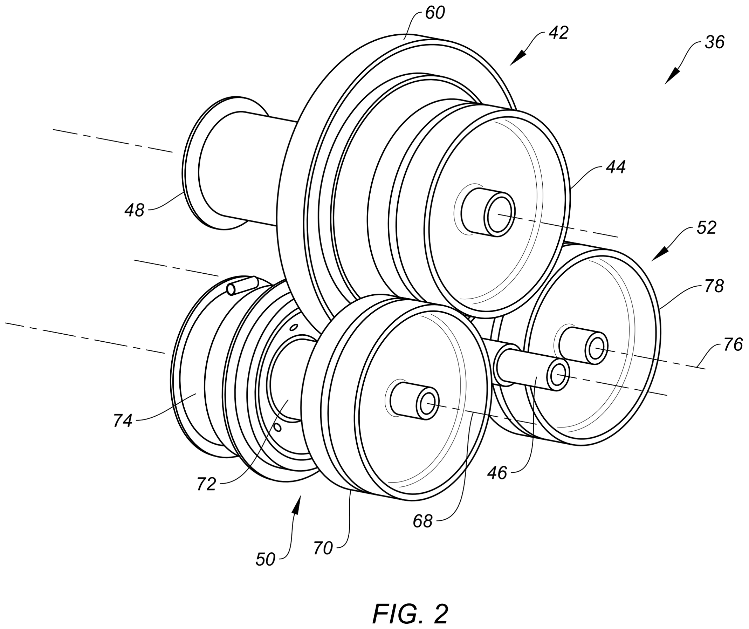

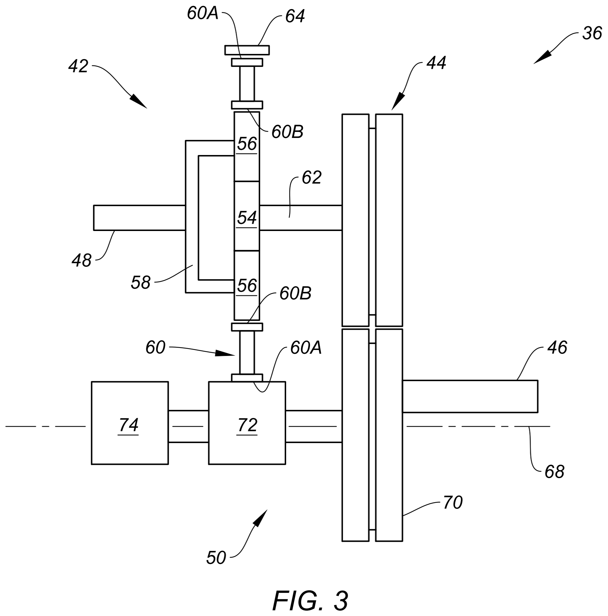

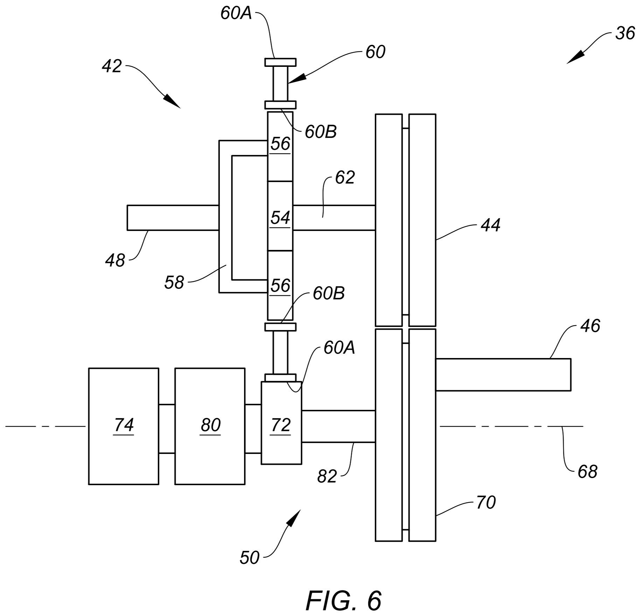

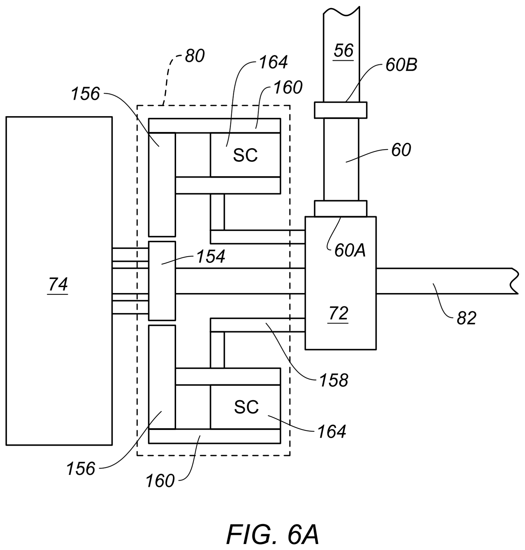

The present invention gearbox 36 embodiment diagrammatically shown in FIGS. 2 and 3 is a two-speed reduction gearbox 36 that includes an epicyclic gear arrangement 42, a drive gear 44, an input shaft 46, an output shaft 48, a first layshaft assembly 50, and a second layshaft assembly 52. As will be detailed herein, certain present invention embodiments may include the epicyclic gear arrangement 42 and include an epicyclic gear assembly 80 as part of a layshaft assembly; e.g., see FIG. 6. To avoid confusion within the present description, the epicyclic gear arrangement 42 will be referred to as the "output shaft epicyclic gear arrangement 42" or the "OS epicyclic gear arrangement 42", and the epicyclic gear assembly 80 associated with a layshaft assembly will be referred to as the "layshaft epicyclic gear arrangement 80" or the "LS epicyclic gear arrangement 80".

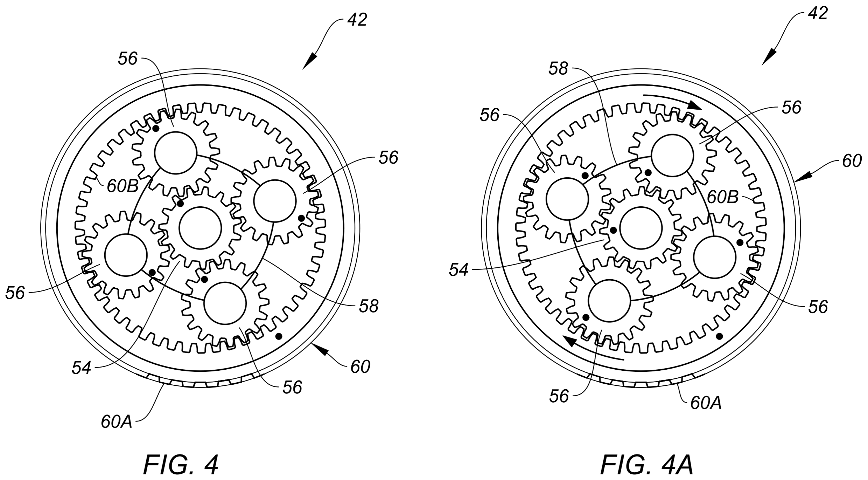

Referring to FIG. 3, the OS epicyclic gear arrangement 42 includes a sun gear 54, a plurality of planet gears 56, a carrier 58, and a ring gear 60. A shaft 62 connects the sun gear 54 to the drive gear 44. A ring gear rotational control device 64 is shown in FIG. 3. The ring gear 60 has an outer diameter surface 60A configured with gear teeth, and an inner diameter surface 60B configured with gear teeth. The sun gear 54 is engaged with the planet gears 56 and the planet gears 56 are engaged with the gear teeth disposed on the inner diameter surface 60B of the ring gear 60. In the OS epicyclic gear arrangement 42 diagrammatically shown in FIGS. 4 and 4A, four planet gears 56 are shown engaged with the sun gear 54 and the ring gear 60. The present invention is not limited to any particular number of planet gears 56 in the OS epicyclic gear arrangement 42. The carrier 58 of the OS epicyclic gear arrangement 42 is connected to each of the planet gears 56 and is connected to the output shaft 48 of the gearbox 36. The output shaft 48 may be directly or indirectly connected to the propulsion unit 38; e.g., see FIG. 1. An example of a gearbox output shaft 48 that is directly engaged with the propulsion unit 38 is one wherein the gearbox output shaft 48 and the drive elements of the propulsion unit 38 (e.g., the propeller shaft) are connected to one another and rotate at the same speed. An example of a gearbox output shaft 48 that is indirectly engaged with the propulsion unit 38 is one wherein the gearbox output shaft 48 and the drive elements of the propulsion unit 38 (e.g., the propeller shaft) are both connected to a gear arrangement and the engine shaft and gearbox input shaft 46 rotate at different rotational speeds.

The ring gear rotational control device 64 is configured to allow the ring gear 60 to rotate in a first direction and to prevent the ring gear 60 from rotating in an opposite second direction. A Sprag clutch is an example of a device that can be used as a ring gear rotational control device 64. The present invention is not limited to using a Sprag clutch as a ring gear rotational control device 64. For example, in some embodiments a ring gear rotational control device 64 may be configured to allow the ring gear 60 to rotate when a predetermined condition exists (e.g., when a layshaft ring engagement gear is engaged to drive the ring gear) and to not allow the ring gear 60 to rotate when a predetermined condition exists (e.g., when a layshaft ring engagement gear is disengaged with the ring gear). Examples of how a layshaft ring engagement gear may be engaged with, or disengaged from, a ring gear are described herein.

The gearbox input shaft 46 is directly or indirectly engaged with, and is driven by, the gas turbine engine 20. An example of a gearbox input shaft 46 that is directly engaged with the gas turbine engine 20 is one wherein the gearbox input shaft 46 is connected to an engine shaft and rotates at the same speed as the engine shaft. An example of a gearbox input shaft 46 that is indirectly engaged with the gas turbine engine 20 is one wherein the gearbox input shaft 46 and the engine shaft are both connected to a gear arrangement (not shown) and the engine shaft and gearbox input shaft 46 rotate at different rotational speeds. In the gas turbine engine 20 shown in FIG. 1, a shaft 66 extending from the power turbine 34 is an example of an engine shaft that may be directly or indirectly engaged with the gearbox input shaft 46. As will be detailed herein, the first layshaft assembly 50 and the second layshaft assembly 52 (see FIG. 2) are engaged with the gearbox input shaft 46.

The first layshaft assembly 50 is disposed along a first layshaft rotational axis 68 and includes a first layshaft input gear 70, a first layshaft ring engagement gear 72, and a first clutch 74. The first layshaft input gear 70 is engaged with the gearbox input shaft 46. The first layshaft ring engagement gear 72 is engaged with the ring gear 60 of the OS epicyclic gear arrangement 42 and is in communication with the first clutch 74. The first clutch 74 is disposable in a "clutch-engaged" configuration or in a "clutch-disengaged" configuration. In the clutch-engaged configuration, the first clutch 74 couples the first layshaft ring engagement gear 72 with the first layshaft input gear 70. Hence, in the clutch-engaged configuration, the first layshaft ring engagement gear 72 is driven via the first layshaft input gear 70 and the gearbox input shaft 46, and the first layshaft ring engagement gear 72 drives the ring gear 60 of the OS epicyclic gear arrangement 42. In the clutch-disengaged configuration, the first clutch 74 does not couple the first layshaft ring engagement gear 72 and the first layshaft input gear 70, and consequently the first layshaft ring engagement gear 72 is not driven.

In some embodiments, the second layshaft assembly 52 may be configured substantially the same as the first layshaft assembly 50; e.g., configured such that the second layshaft assembly 52 is disposed along a second layshaft rotational axis 76 and includes a second layshaft input gear 78, a second layshaft ring gear (not shown), and a second clutch (not shown). The second layshaft input gear 78 is engaged with the gearbox input shaft 46 and the second layshaft ring gear is engaged with the ring gear 60 of the OS epicyclic gear arrangement 42 and is in communication with the second clutch. The second clutch is disposable in a disengaged configuration or in an engaged configuration; e.g., like the first clutch 74.

In some embodiments, the second layshaft assembly 52 may be configured substantially the same as the first layshaft assembly 50 but without a clutch. In the absence of a clutch, the second layshaft ring gear may be engaged with the ring gear 60 of the OS epicyclic gear arrangement 42 as an idler gear.

As detailed herein, gas turbine engines (e.g., a turboprop) very often have an range of rotational speeds in which the engine 20 has desirable efficiency and a range of rotational speeds in which the engine 20 has less than desirable efficiency. In many instances, it is desirable to have a propeller rotational speed that is less than the rotational speed of the engine 20 powering the propeller.

Embodiments of the present invention two-speed gearbox 36 provide a structure that allows the gas turbine engine 20 to operate in a rotational speed range that is beneficial (e.g., efficient) for the gas turbine engine 20 and allows the propulsion system (e.g., the propeller) to be driven in a rotational speed range that provides a desired amount of thrust and an acceptable level of noise.

During the operation of a gas turbine engine 20 with a propulsion unit 38 and a present invention two-speed gearbox 36, the gas turbine engine 20 drives the input shaft 46 of the gearbox 36. As indicated herein, a power turbine shaft 66 may directly or indirectly provide drive to the input shaft 46 of the gearbox 36. The input shaft 46 of the gearbox 36, in turn, drives the first and second layshaft assemblies; i.e., drives the first layshaft input gear 70 and the second layshaft input gear 78.

As detailed herein, the present invention two-speed gearbox 36 may be operated in a first mode (e.g., a "low-speed mode") or in a second mode (e.g., a "high-speed mode"). In a turboprop application, it may be desirable to operate the gearbox 36 in a low-speed mode during certain flight segments when a lower propeller speed may be desirable; e.g., during a climb segment or a cruise segment. In a turboprop application, it may also be desirable to operate the gearbox 36 in a high-speed mode during certain flight segments when a higher propeller speed may be desirable; e.g., during a takeoff segment. In both modes, the input shaft 46 of the gearbox 36 drives the first and second layshaft input gears 70, 78 and the first and second layshaft input gears 70, 78, in turn, drive the drive gear 44. The drive gear 44 is connected by shaft 62 with the sun gear 54 of the OS epicyclic gear arrangement 42. Hence, in the first mode and the second mode, the drive gear 44 is driven and the drive gear 44, in turn, drives the sun gear 54, planet gears 56, and carrier 58 of the OS epicyclic gear arrangement 42.

As described herein, the first layshaft assembly 50, or the second layshaft assembly 52, or both may include a clutch 74 disposable in a clutch-engaged configuration or in a clutch-disengaged configuration. To facilitate the description herein, the operation of the present invention will be described hereinafter in terms of only the first layshaft assembly 50 having a clutch 74 unless otherwise indicated. To be clear, the present invention is not limited to only the first layshaft assembly 50 having a clutch 74.

In the first mode, the first layshaft clutch 74 is disposed in the clutch-disengaged configuration. The first layshaft ring engagement gear 72 is not coupled with the first layshaft input gear 70. The first layshaft ring engagement gear 72 is, therefore, not driven and therefore does not drive the ring gear 60 of the OS epicyclic gear arrangement 42. The gas turbine engine 20 (e.g., the power turbine shaft 66) drives the gearbox input shaft 46 and the gearbox input shaft 46 drives both the first and second layshaft assemblies 50, 52; i.e., drives the first layshaft input gear 70 and the second layshaft input gear 78. The first and second layshaft input gears 70, 78, in turn, drive the drive gear 44. The drive gear 44 is connected to the sun gear 54 of the OS epicyclic gear arrangement 42. The first and second layshaft input gears 70, 78 drive the drive gear 44, and the drive gear 44 drives the sun gear 54, planet gears 56, and carrier 58 of the OS epicyclic gear arrangement 42. The carrier 58 drives the gearbox output shaft 48, which in turn drives the propulsion unit 38.

As detailed herein, the ring gear rotational control device 64 is configured to allow the ring gear 60 to rotate in a first direction and to prevent the ring gear 60 from rotating in an opposite second direction. In the first mode, the ring gear rotational control device 64 prevents the ring gear 60 from rotating.

In the second mode, the clutch 74 is disposed in the clutch-engaged configuration wherein the clutch 74 couples the first layshaft ring engagement gear 72 with the first layshaft input gear 70. Hence, in the clutch-engaged configuration, the first layshaft ring engagement gear 72 is driven via the first layshaft input gear 70. The first layshaft ring engagement gear 72, in turn, drives the ring gear 60 of the OS epicyclic gear arrangement 42. It should be noted that the ring gear rotational control device 64 does not prevent the first layshaft ring engagement gear 72 from driving the ring gear 60 of the OS epicyclic gear arrangement 42. The first layshaft ring engagement gear 72 driving the ring gear 60 causes the ring gear 60 to rotate, and the rotation of the ring gear 60 causes the carrier 58 of the OS epicyclic gear arrangement 42 to rotate faster than it would if the ring gear 60 was stationary. As a result, in the second mode power is transmitted to the output shaft 48 of the gearbox 36 along a first path via the first and second layshaft input gears 70, 78 driving the drive gear 44, and the drive gear 44 driving the OS epicyclic gear arrangement 42, and along a second path via the first layshaft ring engagement gear 72 of the first layshaft assembly 50 driving the ring gear 60 of the OS epicyclic gear arrangement 42. Exactly how much of the power transferred to the gearbox output shaft 48 is transferred along the first path and how much along the second path will depend on the overall gear ratio of the gears within the gearbox 36. It is understood that a ratio of approximately 4:1 (first path : second path) is representative of what would work in many applications. In this example, twenty percent (20%) of the power transferred from the gas turbine engine 20 to the propulsion unit 38 would be transferred through the clutched first layshaft assembly 50. Moreover, the present invention two-speed gearbox 36 allows the gas turbine engine 20 to be operated in a rotational speed range that is beneficial for the gas turbine engine 20 and allows the propulsion system (e.g., the propeller) to be driven in a desirable rotational speed range.

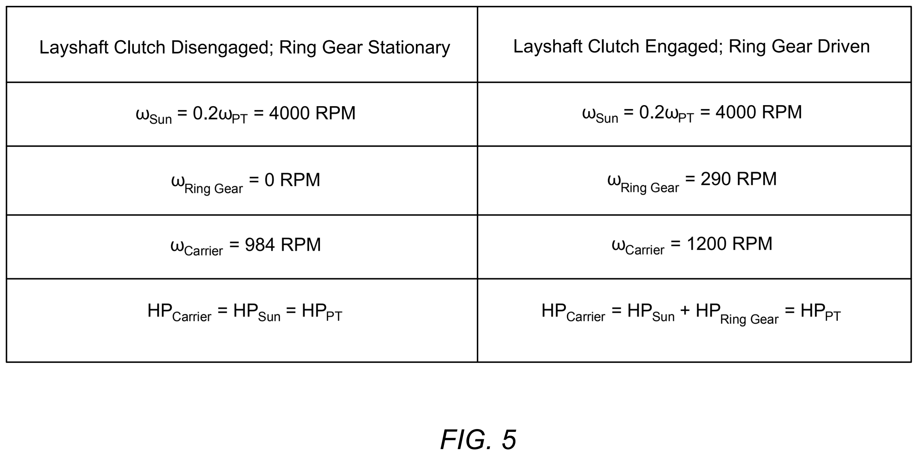

The table shown in FIG. 5 provides an illustration of the differences between the present invention two-speed gearbox 36 operating in the first mode (e.g., the "low-speed mode") or in the second mode (e.g., the "high-speed mode"). The data in the table is provided to illustrate an example and is not intended to be limiting.

As indicated herein, the operation of the present invention is described above in terms of only the first layshaft assembly 50 having a clutch 74, but the present invention is not limited to only one layshaft assembly having a clutch. Present invention embodiments wherein each layshaft assembly 50, 52 includes a clutch can provide substantial benefits. For example, when both the first and second layshaft assemblies 50, 52 have a clutch, the system is provided with desirable redundancy and more operational modes; e.g., operate a single clutch, switch from operating a first clutch 74 to operating a second clutch, operate the clutches together, and the like. As another example, if the ring gear rotational control device 64 is inoperable, one of the clutched layshaft assemblies can control the rotation of ring gear 60 of the OS epicyclic gear arrangement 42.

In the first mode (e.g., the "low-speed mode") described above, the ring gear 60 of the OS epicyclic gear arrangement 42 remains stationary and in the second mode (e.g., the "high-speed mode"), the ring gear 60 of the OS epicyclic gear arrangement 42 is rotationally driven. In both of these modes, the carrier 58 of the OS epicyclic gear arrangement 42 is rotationally driven and the carrier 58 in turn drives the output shaft 48 of the gearbox 36. In an alternative configuration, the output shaft 48 of the gearbox 36 could be driven by the ring gear 60 of the OS epicyclic gear arrangement 42 and rotation of the carrier 58 could be controlled to achieve the low-speed mode and the high-speed mode. For example, in a first mode (e.g., the "low-speed mode") of this embodiment, the carrier 58 of the OS epicyclic gear arrangement 42 may remain stationary and the ring gear 60 rotates, and in a second mode (e.g., the "high-speed mode"), the carrier 58 may be rotationally driven by one or both layshaft assemblies; e.g., by the first layshaft assembly 50.

In yet another alternative configuration, the ring gear 60 of the OS epicyclic gear arrangement 42 may be maintained in a high-speed mode with the layshaft assembly clutch(es) 74 in a clutch-disengaged configuration. In this configuration, the low-speed mode would include the layshaft assembly clutch(es) 74 disposed in a clutch-engaged configuration, driving the OS epicyclic gear arrangement 42 ring in a manner that slows the rotational speed of the carrier 58. The ring gear rotational control device 64 is configured to allow the ring gear 60 to be driven in a first direction and to prevent the ring gear 60 from rotating in an opposite second direction.

In some present invention embodiments, a layshaft assembly that includes a clutch may also include a epicyclic gear assembly; i.e., an LS layshaft epicyclic gear arrangement 80. Embodiments of the LS epicyclic gear assembly can provide a geared speed reduction for a layshaft that is physically compact.

FIG. 6 is a diagrammatic representation of a present invention two-speed gearbox 36 embodiment that includes an OS epicyclic gear arrangement 42, an drive gear 44, an input shaft 46, an output shaft 48, a first layshaft assembly 50, and a second layshaft assembly 52. The second layshaft assembly 52 is not shown in the diagrammatic gearbox 36 representation shown in FIG. 6. However, the first and second layshaft assemblies may be oriented as shown in FIG. 2.

The first layshaft assembly 50 is disposed along the first layshaft rotational axis 68 and includes a first layshaft 82, a first layshaft input gear 70, a first layshaft ring gear, a first LS epicyclic gear arrangement 80, and a first clutch 74. The first layshaft input gear 70 is engaged with the gearbox input shaft 46 and is mounted on the first layshaft 82. The first layshaft ring engagement gear 72 is engaged with the ring gear 60 of the OS epicyclic gear arrangement 42. The first LS epicyclic gear arrangement 80 and the first clutch 74 are in communication with the first layshaft 82.

To facilitate the description herein, FIG. 6A is a diagrammatic enlargement of the portion of the first layshaft assembly 50 that includes the first layshaft ring engagement gear 72, the first LS epicyclic gear arrangement 80, and the first clutch 74. A portion of the ring gear 60 of the OS epicyclic gear arrangement 42 is shown engaged with the first layshaft ring engagement gear 72.

The first LS epicyclic gear arrangement 80 includes an FL sun gear 154, a plurality of FL planet gears 156, an FL carrier 158, and an FL ring gear 160. The first layshaft 82 extends through the FL sun gear 154, but the FL sun gear 154 is not fixed to the first layshaft 82. The first layshaft 82 is in communication with the first clutch 74. The FL sun gear 154 is engaged with the FL planet gears 156 and the FL planet gears 156 are engaged with the FL ring gear 160. The first LS epicyclic gear arrangement 80 is not limited to any particular number of FL planet gears 156 other than two or more. The FL ring gear 160 is mounted so as to be stationary relative to the FL planet gears 156. The FL carrier 158 extends between the PL planet gears 156 and the first layshaft ring engagement gear 72. Alternatively, the FL carrier 158 may be stationary, the FL sun gear 154 rotating relative to the FL planet gears 156, and the FL ring gear 160 engaged with the first layshaft ring engagement gear 72.

The first clutch 74 is disposable in a clutch-engaged configuration or in a clutch-disengaged configuration. In the clutch-engaged configuration, the first clutch 74 transfers rotational drive from the first layshaft 82 to the FL sun gear 154. The FL sun gear 154, in turn, drives the FL planet gears 156 and the FL planet gears 156 drive the FL carrier 158. The FL carrier 158 is connected to the first layshaft ring engagement gear 72. Hence, rotation of the FL carrier 158 causes rotation of the first layshaft ring engagement gear 72 and the first layshaft ring engagement gear 72 transmits power to the ring gear 60 of the OS epicyclic gear arrangement 42.

In the clutch-disengaged configuration, the first clutch 74 does not transfer rotational drive from the first layshaft 82 to the FL sun gear 154. Hence, in the clutch-disengaged configuration, the first layshaft ring engagement gear 72 may rotate freely.

In the embodiment shown in FIG. 6A, one or more rotational control devices 164 (e.g., Sprag clutches) are configured to allow the FL carrier 158 and connected first layshaft ring engagement gear 72 to rotate in a first direction and to prevent the same from rotating in an opposite second direction. As indicated herein, the first layshaft ring engagement gear 72 is in geared communication with the ring gear 60 of the OS epicyclic gear arrangement 42. The one or more rotational control devices 164 that allow the FL carrier 158 and connected first layshaft ring engagement gear 72 to rotate in a first direction and to prevent the same from rotating in an opposite second direction, therefore also allow the ring gear 60 of the OS epicyclic gear arrangement 42 to rotate in one direction and prevent the same from rotating in an opposite direction.

As stated above, in some embodiments the first layshaft assembly 50 and/or the second layshaft assembly 52 may include a clutch that is disposable in a "clutch-engaged" configuration or in a "clutch-disengaged" configuration. An example of a clutch (e.g., first clutch 74) is shown in FIG. 3 and described herein.

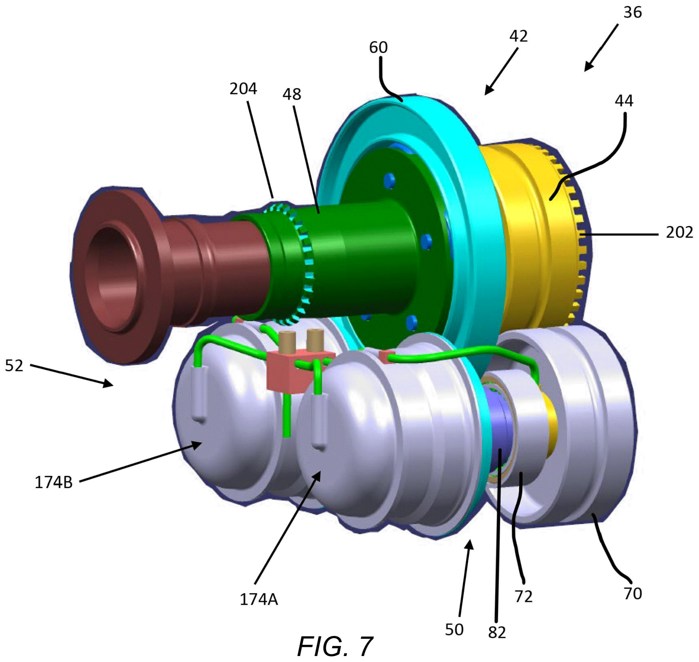

In some embodiments, the present invention two-speed gearbox 36 may include a clutch that is configured as a hydraulically actuated clutch system. FIG. 7 diagrammatically illustrates a present invention two-speed gearbox 36 with a clutch system that includes a first hydraulically actuated clutch system 174A engaged with the first layshaft 82 and a second hydraulically actuated clutch 174B engaged with the second layshaft. As stated herein, the present invention does not require each layshaft be engaged with a clutch. To illustrate this present invention aspect, the first hydraulically actuated clutch 174A engaged with the first layshaft 82 is described hereinafter.

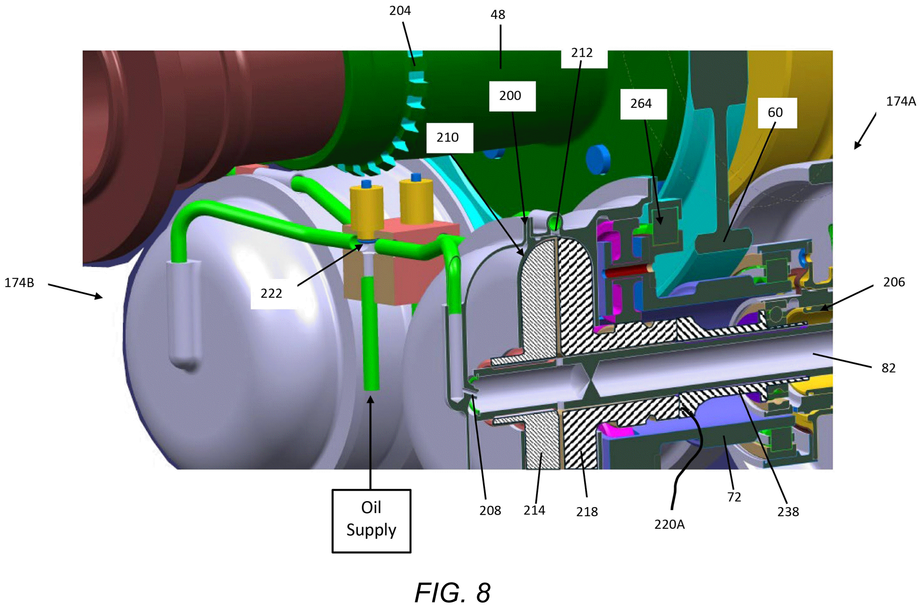

Referring to FIG. 8, the first hydraulically actuated clutch system 174A includes a hydraulic coupling device 200, an input rotational speed sensor 202 (see FIG. 7), an output rotational sensor 204, and appropriate valving and other fluid control devices that control the flow of fluid into and out of the first hydraulically actuated clutch system 174A. In some embodiments, the first hydraulically actuated clutch system 174A may include a ring gear rotational control device 264 (e.g., a Sprag clutch - see FIG. 8) configured to allow the ring gear 60 to rotate in a first direction and to prevent the ring gear 60 from rotating in an opposite second direction as described herein; e.g., see FIGS. 3 and 8. In some embodiments, the hydraulically actuated clutch system 174A may include a dog clutch 206.

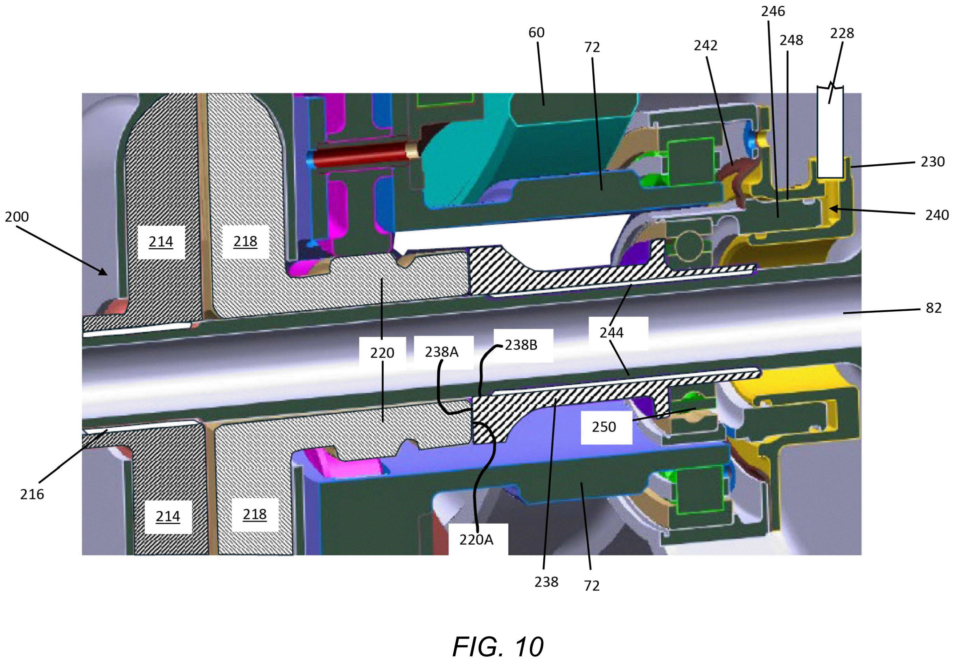

Referring to FIG. 8, the hydraulic coupling device 200 is configured to operate according to the Föttinger principle. The device includes a pair blade wheels that couple together to form a working chamber. A fluid inlet port 208 allows the passage of fluid into the working chamber 210 of the hydraulic coupling device 200 and a fluid exit port 212 allows the passage of fluid out of the working chamber 210. One of the blade wheels (which may be referred to as the pump impeller 214) is engaged to be driven with the first layshaft 82 and the first layshaft input gear 70 (e.g., see FIG. 6). FIG. 10 diagrammatically illustrates the pump impeller 214 in a splined arrangement 216 with the first layshaft 82. The other blade wheel (which may be referred to as the turbine wheel 218) is engaged with the first layshaft ring engagement gear 72. As can be seen in FIGS. 8 and 10, the turbine wheel 218 includes an axially extending flange 220. The flange 220 is connected to the first layshaft ring engagement gear 72 and in communication with the rotational control device 264. The distal end 220A of the flange 220 is configured for mechanical engagement with the dog clutch 206 hub as will be described herein. A non-limiting example of fluid utilized to power the hydraulic coupling device 200 is engine oil utilized within the gas turbine engine 20, or the like. To facilitate the description herein the fluid will be referred to as engine oil, but the present invention is not limited thereto.

Referring to FIG. 7, the input rotational speed sensor 202 is configured to sense the rotational speed of the drive gear 44 as an input rotational speed of the gearbox 36. The output rotational speed sensor 204 is configured to sense the rotational speed of the output shaft 48 as an output rotational speed of the gearbox 36. In the example shown in FIG. 7, the input rotational speed sensor 202 and the output rotational speed sensor 204 include phonic wheel sensors. The present invention is not limited to any particular type of input and output rotational velocity sensors.

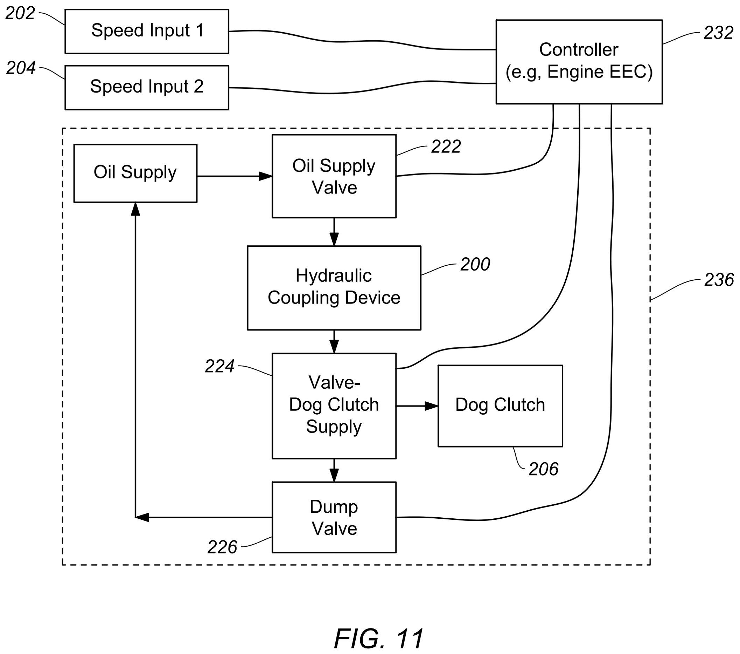

The valving includes a supply valve 222, a dog clutch valve 224, and a dump valve 226. The supply valve 222 (e.g., see FIG. 8) is in fluid communication with a supply (labeled as "Oil Supply" in FIGS. 8 and 11) of the fluid (e.g., engine oil) utilized within the hydraulic coupling device 200 and is in fluid communication with the hydraulic coupling device 200; e.g., the fluid inlet port 208 of the hydraulic coupling device 200. The supply valve 222 is a controllable valve; e.g., controllable between an open state that allows fluid flow therethrough and a closed state that does not allows fluid flow therethrough.

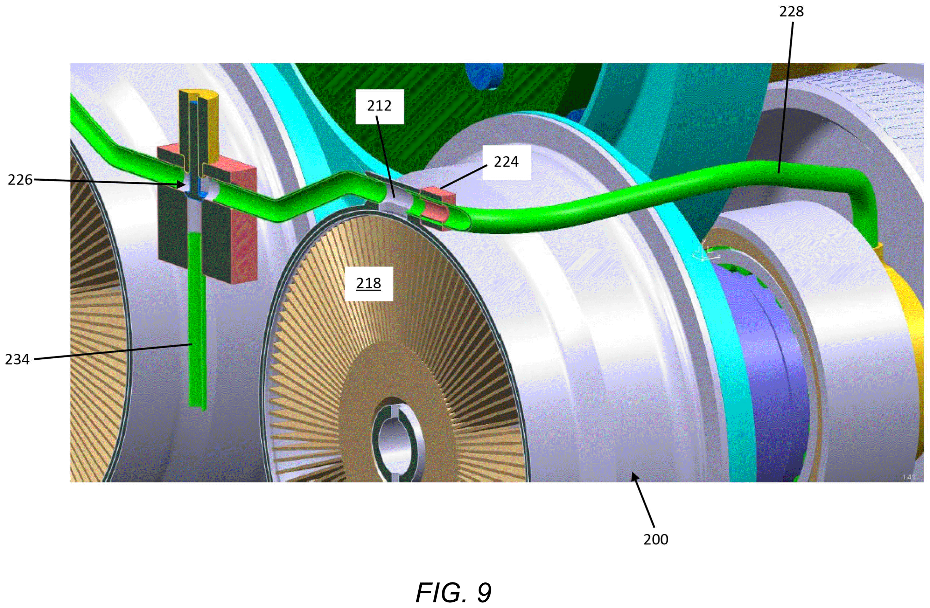

Referring to FIG. 9, the dog clutch valve 224 is in fluid communication with the fluid exit port 212 of the hydraulic coupling device 200, the dump valve 226, and with the dog clutch 206 as will be detailed herein. FIG. 9 diagrammatically illustrates the dog clutch valve 224 in line within a supply line 228 that extends from the fluid exit port 212 to the dog clutch 206. FIG. 10 diagrammatically illustrates the supply line 228 at the dog clutch fluid port 230. The dog clutch valve 224 is a controllable valve; e.g., controllable between an open state that allows fluid flow therethrough and a closed state that does not allows fluid flow therethrough. As will be detailed herein, the dog clutch valve 224 may be controlled (i.e., actuated) based on the pressure of the fluid engaging the dog clutch valve 224 from the hydraulic coupling device 200. In some embodiments, the dog clutch valve 224 may be a mechanical valve that is actuated between the open state and the closed state by fluid pressure. In some embodiments, the dog clutch valve 224 may be an electromechanical valve that is actuated by an actuator (e.g., a solenoid) directly or indirectly in signal communication with a pressure sensor between the open state and the closed state. FIG. 11 diagrammatically illustrates a communication line between a controller 232 and the dog clutch valve 224 for those embodiments wherein the dog clutch valve 224 may be an electromechanical valve. Alternatively, or in addition, the communication line between the controller 232 and the dog clutch valve 224 may provide signal communication between sensors (e.g., valve positional sensors, fluid pressure sensors, or the like) and the controller 232. The present invention is not limited to any particular dog clutch valve 224 configuration other than one that is controllable between an open state and a closed state.

FIG. 9 diagrammatically illustrates the dump valve 226 in fluid communication with the fluid exit port 212 of the hydraulic coupling device 200, the dog clutch valve 224, and with a fluid return line 234. The fluid return line 234 is part of an oil subsystem 236 that cycles the oil back to the oil supply, and provides the oil from the oil supply as described herein. FIG. 11 diagrammatically illustrates the oil subsystem 236 in the formed of a dashed line box. The dump valve 226 is a controllable valve; e.g., controllable between an open state that allows fluid flow therethrough and a closed state that does not allows fluid flow therethrough. In the closed state, the dump valve 226 prevents fluid flow into the fluid return line 234, and in the open state, the dump valve 226 allows fluid flow into the fluid return line 234.

Referring to FIG. 10, the dog clutch 206 includes a hub 238, a linear actuator 240, a return spring 242, and a fluid port 230. The hub 238 includes an engagement face 238A disposed at a first axial end and a central bore 238B that extends axially. The engagement face 238A of the hub 238 is configured for mechanical engagement with the flange distal end 220A of the turbine wheel 218; e.g., the engagement face 238A and the flange distal end 220A may comprise mating teeth configurations, or mating castellations, or the like. The first layshaft 82 is received within the central bore 238B of the hub 238. The hub 238 is mechanically engaged with the first layshaft 82 in a manner that allows for axial translation of the hub 238 relative to the first layshaft 82. For example, in the embodiment shown in FIG. 10, a splined arrangement 244 is used to mechanically engage the hub 238 with the first layshaft 82 and to allow axial translation of the hub 238 relative to the first layshaft 82. The present invention does not require a splined arrangement 244 between the hub 238 and the first layshaft 82.

The linear actuator 240 includes a piston 246 disposed within an annular cavity 248. The dog clutch fluid port 230 provides fluid access to the annular cavity 248. The piston 246 is axially translatable within the annular cavity 248 and is disposable in a deployed state or in a non-deployed state. The piston 246 is engaged with a bearing 250 that is engaged with the hub 238, and disposed between the piston 246 and the hub 238. The return spring 242 is engaged with the piston 246 to normally bias the piston 246 in the non-deployed state (and therefore the hub 238 in a disengaged configuration as detailed below). The term "biased" refers to the spring force produced by the return spring 242 acting against the piston 246 in a direction that resists axial translation of the piston 246 away from the normal position.

The dog clutch 206 is configured to be disposed in an engaged configuration or in a disengaged configuration. In the engaged configuration, the turbine wheel 218 and the hub 238 are mechanically engaged with one another and rotate as a couple. In the disengaged configuration, the turbine wheel 218 and the hub 238 are not mechanically engaged with one another, and may rotate at different rotational velocities from one another.

As described above, in some embodiments the present invention system may include a controller 232 or be implemented using a controller; e.g., a "shared controller" dedicated to perform other functionality as well as the functionality described herein. A non-limiting example of a "shared controller" is the electronic engine control (EEC). Regardless of whether a dedicated controller or a "shared controller" is utilized, the controller 232 is in communication with other system components such as the oil supply valve 222, the dump valve 226, and the like; e.g., to control the operation of the respective system component and/or to receive signals from and/or transmit signals to that system component to perform the functions described herein. The controller 232 may include one or more of any type of computing device, computational circuit, processor(s), CPU, computer, or the like (collectively referred to as a "control device") capable of executing a series of instructions that are stored in memory. In those embodiments wherein the controller 232 includes more than one control device, the control devices may be in communication with one another and may be disposed in any architecture that is capable of achieving the functionality described herein. The instructions may include an operating system, and/or executable software modules such as program files, system data, buffers, drivers, utilities, and the like. The executable instructions may apply to any functionality described herein to enable the inspection system to accomplish the same algorithmically and/or coordination of system components. The controller 232 includes or is in communication with one or more memory devices. The present invention is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. The controller 232 may include, or may be in communication with, an input device (not shown) that enables a user to enter data and/or instructions, and may include, or be in communication with, an output device configured, for example to display information (e.g., a visual display, or the like), or to transfer data, etc. Communications between the controller 232 and other system components may be via a hardwire connection or via a wireless connection.

Referring to FIG. 11, the description below details an example of how the present invention first hydraulically actuated clutch system 174A described herein may be operated within the two-speed gearbox 36. To dispose the clutch in a clutch-engaged configuration (and thereby operate the two-speed gearbox 36 in the second mode / high-speed mode), the controller 232 (e.g., the EEC) accepts signal data from the input rotational speed sensor 202 representative of the input rotational speed of the two-speed reduction gearbox 36, and signal data from the output rotational speed sensor 204 representative of the output rotational speed of the two-speed reduction gearbox 36. Based on the relative input and output rotational speeds, the controller 232 may (via stored instructions) actuate the oil supply valve 222 to provide oil from the oil supply to the hydraulic coupling device 200. When the system 174A is in a clutch-disengaged configuration, the pump impeller 214 of the hydraulic coupling device 200 is rotationally driven (i.e., by the first layshaft input gear 70) and the turbine wheel 218 of the hydraulic coupling device 200 is not driven. An amount of oil is supplied to the working chamber 210 of the hydraulic coupling device 200 that is adequate for the hydraulic coupling device 200 to fully operate; i.e., to cause the turbine wheel 218 portion of the hydraulic coupling device 200 to rotate at about the same rotational velocity as the pump impeller 214 portion of the device. In other words, the pump impeller 214 accelerates the oil added to the working chamber 210 and the kinetic energy of the oil flow acts upon the turbine wheel 218. The rotational velocity of the turbine wheel 218 is likely to be slightly less than that of the pump impeller 214. This difference in rotational velocity may be referred to as the "slip" of the hydraulic coupling device 200.

As the rotational velocity of the hydraulic coupling device 200 increases, the pressure of the oil disposed within the working chamber 210 of the hydraulic coupling device 200 also increases. The relationship between the pressure of the oil disposed within the working chamber 210 and the rotational velocity of the hydraulic coupling device 200 may be known; e.g., known oil pressure at given rotational velocities for the oil used. The aforesaid relationship may be disposed in the form of a data table within the stored instructions, or an algorithm, or the like. As the hydraulic coupling device 200 rotates, the dog clutch valve 224 is in fluid communication with the oil disposed within the working chamber 210 and is disposed in a closed configuration. At the same time, the dump valve 226 is also closed.

When the oil reaches a predetermined pressure (e.g., or a related hydraulic coupling device 200 rotational velocity), the dog clutch valve 224 is controlled to (or configured to) change from a closed state to an open state. At the same time, the dump valve 226 remains closed. The pressurized oil, now exiting the hydraulic coupling device 200, travels through the dog clutch valve 224 and enters dog clutch 206. Up to this point, the linear actuator piston 246 has been normally biased in the non-deployed state by the return spring 242, with the hub 238 of the dog clutch 206 disposed in a disengaged configuration. The pressurized oil now disposed within the annular cavity 248 of the linear actuator 240 acts on the linear actuator piston 246 causing it to overcome the bias of the return spring 242 and axially translate the piston 246, the bearing disposed between the piston 246 and the hub 238, and the hub 238 itself. The linear translation causes the engagement face 238A of the hub 238 to mechanically engage with the flange distal end 220A of the turbine wheel 218. As described herein, the hub 238 is mechanically engaged with the first layshaft 82; e.g., by splined arrangement. Consequently, once the hub 238 is mechanically engaged with the turbine wheel 218, the turbine wheel 218 portion and the pump impeller 214 of the hydraulic coupling device 200 are rotationally driven at the same speed; i.e., zero slip.

To control the clutch from a clutch-engaged configuration to a clutch-disengaged configuration (and thereby operate the two-speed gearbox 36 in the first mode / low-speed mode), the dump valve 226 is actuated (e.g., using the controller 232 and stored instructions) from the closed state to the open state, and the oil supply valve 222 is actuated from the open state to the closed state. Once the dump valve 226 is opened and the oil supply valve 222 is closed, the continued rotation of the pump impeller 214 within the working chamber 210 causes the oil to drain from the working chamber 210, pass through the dump valve 226, and return to the oil subsystem 236. Once the pressure of the fluid drops below predetermined pressure threshold, the dog clutch valve 224 is controlled to (or configured to) change from the open state to the closed state. Thereafter, the pump impeller 214 of the hydraulic coupling device 200 is rotationally driven and the turbine wheel 218 of the hydraulic coupling device 200 is not driven. Consequently, no rotational drive is supplied to the ring gear 60.

While the principles of the invention have been described above in connection with specific apparatuses and methods, it is to be clearly understood that this description is made only by way of example and not as limitation on the scope of the invention. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this invention by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the invention may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the invention--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present invention are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. An aircraft propulsion system, comprising:
a thermal engine;
a gearbox that includes an input shaft, an output shaft, an epicyclic gear arrangement, a drive gear, and a first layshaft assembly, wherein the input shaft is driven by the thermal engine; and
a hydraulically actuated clutch system that includes a hydraulic coupling device engaged with the first layshaft assembly, wherein:
the epicyclic gear arrangement includes a sun gear, a plurality of planet gears, and a ring gear, wherein the sun gear is connected with the drive gear;
the first layshaft assembly extends along a first layshaft rotational axis and includes a first layshaft, a first layshaft input gear, and a first layshaft ring engagement gear;
the first layshaft ring engagement gear is engaged with the ring gear, and the first layshaft input gear is engaged with the drive gear and the input shaft; and
the hydraulically actuated clutch system is disposable in a disengaged configuration wherein the first layshaft ring engagement gear is uncoupled with the first layshaft input gear, and in an engaged configuration wherein the first layshaft ring engagement gear is coupled with the first layshaft input gear.

2. The aircraft propulsion system of claim 1, wherein the hydraulic coupling device includes:
a pump impeller and a turbine wheel disposed in a working chamber;
a fluid inlet port; and
a fluid outlet port, wherein the pump impeller is engaged to be driven with the first layshaft input gear, and the turbine wheel is engaged with the first layshaft ring engagement gear, and the pump impeller is configured to utilize a fluid disposed within the working chamber to drive the turbine wheel.

3. The aircraft propulsion system of claim 2, wherein the turbine wheel includes a central bore for receiving the first layshaft and includes an axially extending flange having an engagement face disposed at a distal axial end of the flange.

4. The aircraft propulsion system of claim 2 or 3, wherein:
the hydraulically actuated clutch system further includes a dog clutch (DC) that is configured to be disposed in a DC engaged configuration or in a DC disengaged configuration; and
in the DC engaged configuration, the turbine wheel and a hub of the dog clutch are mechanically engaged with one another and rotate as a couple, and in the DC disengaged configuration, the turbine wheel and the hub are not mechanically engaged with one another.

5. The aircraft propulsion system of claim 4, wherein:
the dog clutch includes a linear actuator having a piston that is axially translatable between a deployed state and a non-deployed state; and
the linear actuator is configured to be in the non-deployed state when the linear actuator is subjected to the fluid at a pressure below a predetermined threshold pressure value, and configured to be in the deployed state when the linear actuator is subjected to the fluid at a pressure at or above the predetermined threshold pressure value,
optionally wherein:
when the linear actuator is in the deployed state, the dog clutch is in the DC engaged configuration, and wherein when the linear actuator is in the non-deployed state, the dog clutch is in the DC disengaged configuration; and/or
the dog clutch further includes a return spring configured to normally bias the piston in the non-deployed state.

6. The aircraft propulsion system of claim 4 or 5, wherein:
the hydraulically actuated clutch system includes a dog clutch valve (DCV) that is controllable to be in a DCV open state or in a DCV closed state; and
in the DCV closed state the dog clutch valve is configured to prevent the fluid to flow from the hydraulic coupling device to the dog clutch, and wherein in the DCV open state the dog clutch valve is configured to allow the fluid to flow from the hydraulic coupling device to the dog clutch.

7. The aircraft propulsion system of claim 6, wherein the hydraulically actuated clutch system includes a controller in communication with the dog clutch valve and a non-transitory memory storing instructions, which instructions when executed cause the controller to control the dog clutch valve to change from the DCV closed state to the DCV open state.

8. The aircraft propulsion system of claim 7, wherein the hydraulically actuated clutch system includes:
a gearbox input rotational speed sensor that is configured to sense a rotational speed of the input shaft and produce an input speed value representative of the rotational speed of the input shaft; and
a gearbox output rotational speed sensor that is configured to sense a rotational speed of the output shaft and produce an output speed value representative of the rotational speed of the output shaft, wherein the instructions that when executed cause the controller to control the dog clutch valve to change from the DCV closed state to the DCV open state are based at least in part on the input speed value and the output speed value.

9. The aircraft propulsion system of any preceding claim, wherein:
the hydraulically actuated clutch system includes a supply valve (SV) that is controllable to be in a SV open state or in a SV closed state; and
in the SV open state the supply valve is configured to allow flow of the fluid from a fluid supply into the hydraulic coupling device, and in the SV closed state the supply valve allows flow of the fluid from the hydraulic coupling device back to the fluid supply.

10. The aircraft propulsion system of any preceding claim, wherein:
the hydraulically actuated clutch system includes a dump valve (DV) that is controllable to be in a DV open state or in a DV closed state; and
in the DV closed state the dump valve is configured to prevent the flow of the fluid from the hydraulic coupling device to a or the fluid supply, and in the DV open state the dump valve is configured to allow the flow of the fluid from the hydraulic coupling device to the fluid supply.

11. The aircraft propulsion system of claim 10 when dependent on claims 7 and 9, wherein:
when the dog clutch is disposed in the DC engaged configuration, the instructions when executed cause the controller to control the dog clutch valve to be in the DCV open state, control the supply valve to be in the SV open state, and control the dump valve to be in the DV closed state; and/or
when the dog clutch is disposed in the DC disengaged configuration, the instructions when executed cause the controller to control the dog clutch valve to be in the DCV closed state, control the supply valve to be in the SV closed state, and control the dump valve to be in the DV open state.

12. A method of operating an aircraft propulsion system that includes a thermal engine, the method comprising:
providing a gearbox that includes an input shaft, an output shaft, an epicyclic gear arrangement, a drive gear, and a first layshaft assembly, wherein the input shaft is driven by the thermal engine, wherein the epicyclic gear arrangement includes a sun gear, a plurality of planet gears, and a ring gear, wherein the sun gear is connected with the drive gear;
operating a hydraulically actuated clutch system in a first mode or a second mode, wherein the hydraulically actuated clutch system includes a hydraulic coupling device engaged with the first layshaft assembly, wherein the first layshaft assembly extends along a first layshaft rotational axis and includes a first layshaft, a first layshaft input gear, and a first layshaft ring engagement gear, wherein the first layshaft ring engagement gear is engaged with the ring gear, and the first layshaft input gear is engaged with the drive gear and the input shaft;
operating the hydraulically actuated clutch system in a first mode during a first flight segment by disposing the hydraulically actuated clutch system in a disengaged configuration wherein the first layshaft ring engagement gear is uncoupled with the first layshaft input gear; and
operating the hydraulically actuated clutch system in a second mode during a second flight segment by disposing the hydraulically actuated clutch system in an engaged configuration wherein the first layshaft ring engagement gear is coupled with the first layshaft input gear.

13. The method of claim 12, wherein the hydraulic coupling device includes a pump impeller and a turbine wheel disposed in a working chamber, a fluid inlet port, and a fluid outlet port, wherein the pump impeller is engaged to be driven with the first layshaft input gear, and the turbine wheel is engaged with the first layshaft ring engagement gear, and the pump impeller is configured to utilize a fluid disposed within the working chamber to drive the turbine wheel, and wherein the turbine wheel includes a central bore for receiving the first layshaft and includes an axially extending flange having an engagement face disposed at a distal axial end of the flange.

14. The method of claim 13, wherein:
the step of disposing the hydraulically actuated clutch system in an engaged configuration includes disposing a dog clutch (DC) in a DC engaged configuration, wherein the dog clutch includes a hub, a linear actuator, and a fluid port, and wherein in the DC engaged configuration, the hub is mechanically engaged with the turbine wheel; and/or
the step of disposing the hydraulically actuated clutch system in a disengaged configuration includes disposing a dog clutch in a DC disengaged configuration, wherein the dog clutch includes a hub, a linear actuator, and a fluid port, and wherein in the DC disengaged configuration, the hub is mechanically disengaged with the turbine wheel.

15. The method of claim 14, wherein:
the step of disposing the hydraulically actuated clutch system in an engaged configuration includes:
using a gearbox input rotational speed sensor to sense a rotational speed of the input shaft and produce an input speed value representative of the rotational speed of the input shaft;
using a gearbox output rotational speed sensor to sense a rotational speed of the output shaft and produce an output speed value representative of the rotational speed of the output shaft; and
controlling a dog clutch valve (DCV) to be in a DCV open state, wherein in the DCV open state the dog clutch valve is configured to allow the fluid to flow from the hydraulic coupling device to the dog clutch; and/or
the step of disposing the hydraulically actuated clutch system in an engaged configuration includes:
controlling a supply valve (SV) to be in a SV open state that allows the fluid to flow from a fluid supply into the hydraulic coupling device; and
controlling a dump valve (DV) to be in a DV open state wherein the dump valve prevents flow of the fluid from the hydraulic coupling device to the fluid supply.
